(19) Europäisches Patentamt / European Patent Office / Office européen des brevets

(11) **EP 4 786 508 A1**

(12) **EUROPEAN PATENT APPLICATION**
published in accordance with Art. 153(4) EPC

(43) Date of publication:
05.08.2026 Bulletin 2026/32

(21) Application number: 24873045.9

(22) Date of filing: 27.09.2024

(51) International Patent Classification (IPC):
*C08F 236/06* (2006.01)     *C08F 236/10* (2006.01)
*C08F 220/20* (2006.01)     *H01M 4/62* (2006.01)
*H01M 4/13* (2010.01)     *H01M 4/139* (2010.01)
*H01M 10/0525* (2010.01)

(52) Cooperative Patent Classification (CPC):
C08F 220/20; C08F 236/06; C08F 236/10;
H01M 4/13; H01M 4/139; H01M 4/62;
H01M 10/0525; Y02E 60/10

(86) International application number:
PCT/KR2024/014740

(87) International publication number:
WO 2025/071338 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.09.2023 KR 20230130254

(71) Applicant: Hansol Chemical Co., Ltd
Seoul 06169 (KR)

(72) Inventors:
• KANG, Ji-Sue
Wanju-gun, Jeonbuk-do 55321 (KR)
• PARK, Ji-Hye
Wanju-gun, Jeonbuk-do 55321 (KR)

• KIM, Chang-Beom
Wanju-gun, Jeonbuk-do 55321 (KR)
• PARK, Chan-Su
Wanju-gun, Jeonbuk-do 55321 (KR)
• GWON, Hyeon-Ji
Wanju-gun, Jeonbuk-do 55321 (KR)
• KIM, Gyun-Tae
Wanju-gun, Jeonbuk-do 55321 (KR)
• CHO, Min-Ki
Wanju-gun, Jeonbuk-do 55321 (KR)
• LEE, Eun-Song
Wanju-gun, Jeonbuk-do 55321 (KR)
• KWON, Se-Man
Wanju-gun, Jeonbuk-do 55321 (KR)

(74) Representative: Ipsilon
12 Avenue d'Italie
75013 Paris (FR)

(54) **COPOLYMER PARTICLES, BINDER COMPOSITION COMPRISING SAME, SLURRY, ELECTRODE, AND SECONDARY BATTERY COMPRISING ELECTRODE**

(57)     The present invention relates to copolymer particles, a binder composition comprising the copolymer particles, a slurry, an electrode, and a secondary battery comprising the electrode, and, more specifically, to copolymer particles, a binder composition comprising the copolymer particles, a slurry, an electrode, and a secondary battery comprising the electrode, the copolymer particles exhibiting excellent adhesion between an active material and a metal substrate and/or between active materials and excellent flexibility such that a thick electrode can be produced, and exhibiting excellent stability in an electrolyte solution and excellent slurry dispersibility such that a secondary battery with high initial discharge capacity and excellent charge/discharge cycle characteristics can be produced.

EP 4 786 508 A1

(a) Loading level (mg/cm²) : 45.8

(b) Loading level (mg/cm²) : 45.8

Figure 1

## Description

### Technical Field

The present disclosure relates to copolymer particles, a binder composition including the copolymer particles, a slurry, an electrode, and a secondary battery including the electrode.

### Background Art

With the development and increasing demand for information technology (IT) devices such as laptops and mobile phones, and with the growing market adoption of electric and hybrid vehicles as responses to environmental problems and energy shortages, there is also a growing demand for lithium-ion secondary batteries. Additionally, various studies have been conducted to improve the performance of lithium-ion secondary batteries, that is, to achieve longer life, higher output, higher capacity, higher density, and enhanced stability.

This trend becomes particularly pronounced in materials having high discharge capacity, such as silicon and tin. Accordingly, the initial charge/discharge capacity is high, but the discharge capacity tends to decrease rapidly as cycling proceeds.

Graphite is used as a negative electrode active material in typical lithium-ion secondary batteries, and a recent trend has shown that the use of graphite-silicon-based active materials is increasing. However, as the process in which lithium ions are intercalated into and deintercalated from the active material during charging and discharging, respectively, is repeatedly performed, the active material undergoes volume expansion and contraction, that is, volume changes. Such changes cause detachment of the active material from the electrode, thereby reducing battery capacity as cycling proceeds and resulting in a shortened battery life.

To prevent this problem, efforts have been made to enhance electrode stability and battery performance by reducing the size of active materials to the nanoscale or modifying the shape of such active materials, as well as by increasing the adhesion of binders and suppressing volume expansion using such binders.

In particular, when using a binder, if the adhesion of the binder is low, the charge/discharge cycle life of a secondary battery is reduced due to electrode detachment. Additionally, when an insulating binder is applied, the binder acts as a resistance in the secondary battery, which is problematic. Furthermore, to secure sufficient battery capacity, multiple layers of thin-film electrodes are required. However, in this case, a large amount of expensive separators is used, and high-density current collectors are required, resulting in problems in terms of cost and volume. Accordingly, there is an increasing need to develop high-adhesion binders in order to extend the charge/discharge cycle life of secondary batteries, reduce internal resistance by decreasing the amount of binder used, and increase active material capacity.

[Document of related art]

[Patent Document]

(Patent Document 1) Korean Patent No. 10-1698745

### Disclosure

### Technical Problem

The present disclosure aims to provide copolymer particles formed by polymerizing a mixture including 1.0 to 4.0 parts by weight of a soft monomer per 1.0 part by weight of a hard monomer, wherein the copolymer particles have a structure other than a core-shell structure, and a binder composition including the same.

In particular, the present disclosure aims to provide copolymer particles that exhibit excellent adhesion between an active material and a metal substrate and/or between such active materials, as well as excellent flexibility, thereby enabling production of a thick electrode, and that further exhibit excellent stability in an electrolyte solution and excellent slurry dispersibility, thereby enabling production of a secondary battery with high initial discharge capacity and excellent charge/discharge cycle characteristics, and a binder composition including the same.

Additionally, the present disclosure aims to provide a slurry including the copolymer particles, an electrode, and a secondary battery including the electrode.

However, the problems to be solved by the present application are not limited to the aforementioned description, and other problems not mentioned can be clearly understood by those skilled in the art from the following description.

## Technical Solution

One aspect of the present application provides copolymer particles formed by polymerizing a mixture including 1.0 to 4.0 parts by weight of a soft monomer per 1.0 part by weight of a hard monomer, wherein the copolymer particles have a structure other than a core-shell structure.

Another aspect of the present application provides a binder composition including the copolymer particles.

A further aspect of the present application provides a slurry including the copolymer particles and an electrode active material.

Yet another aspect of the present application provides an electrode including a current collector and an electrode active material layer formed on the current collector, the electrode active material layer including the copolymer particles.

Yet another aspect of the present application provides a secondary battery including the electrode.

## Advantageous Effects

According to the present disclosure, copolymer particles and a binder composition including the same improve the adhesion between an active material and a metal substrate and/or between such active materials, enable production of a flexible and unbreakable thick electrode film, and improve stability in an electrolyte solution and slurry dispersibility, thereby ensuring a secondary battery with high initial discharge capacity and excellent charge/discharge cycle characteristics.

Additionally, when using copolymer particles with excellent adhesion and a binder composition including the same, only a small amount of the binder composition can be used, thereby reducing the internal resistance of a secondary battery and increasing the active material capacity.

## Description of Drawings

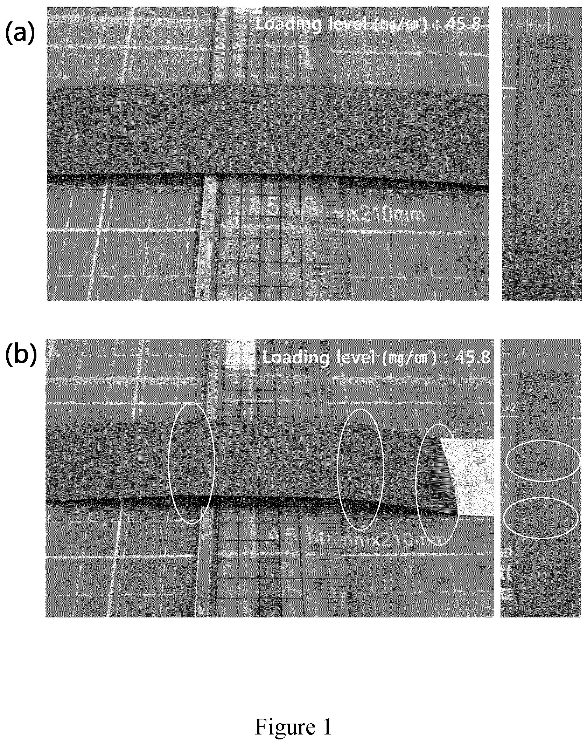

FIGS. 1(a) and 1(b) show photographs of thick electrodes manufactured using binder compositions including copolymer particles prepared in Example 1 and Comparative Example 1, respectively.

## Best Mode

Hereinafter, the action and effect of the present disclosure will be described in more detail through specific embodiments of the present disclosure. However, these embodiments are provided only for illustrative purposes of the present disclosure, and the scope of the present disclosure is not limited thereby.

Before discussing the details, it should be noted that all terms or words used herein and used in the appended claims are not construed as being limited to general or dictionary meanings but will be interpreted based on the meanings and concepts corresponding to the technical ideas of the present disclosure, following the principle that any inventor is allowed to define the concepts of terms as appropriate to describe the disclosure thereof in the best mode.

Therefore, the embodiments described herein are configured merely as one of the most preferable examples of the present disclosure and do not exhaustively represent the technical idea of the present disclosure. Accordingly, it should be appreciated that there may be various equivalents and modifications that can replace these embodiments as of the filing date of the present application.

As used herein, the singular expressions are intended to include the plural forms unless the context clearly indicates otherwise. It will be further understood that the terms "comprise", "include", "have", and the like when used herein, are intended to specify the presence of stated features, integers, steps, constituent elements, or combinations thereof but do not preclude the possibility of the presence or addition of one or more other features, integers, steps, constituent elements, or combinations thereof.

As used herein, the expression "a to b" to represent a numerical range is defined as $\geq a$ and $\leq b$.

According to one aspect of the present application, copolymer particles are formed by polymerizing a mixture including 1.0 to 4.0 parts by weight of a soft monomer per 1.0 part by weight of a hard monomer, and may have a structure other than a core-shell structure.

For example, 1.5 to 3.5 parts by weight or 2.0 to 3.0 parts by weight of the soft monomer may be present per 1.0 part by weight of the hard monomer.

When the part by weight of the soft monomer per 1.0 part by weight of the hard monomer exceeds the above range, stability in an electrolyte solution and mechanical strength may be reduced. In contrast, when the part by weight of the soft monomer per 1.0 part by weight of the hard monomer falls below the above range, dispersibility in a slurry may become poor due to low wettability.

In one embodiment of the present application, the copolymer particles may be single-phase particles rather than core-shell particles. In other words, the copolymer particles may not be prepared by a seed polymerization method in which a shell is formed on a core particle using the core particle as a seed. When the copolymer particles do not have a core-shell structure prepared by the seed polymerization method, the process can be simplified because polymerization into single-phase particles is possible without the need to synthesize the seed separately.

In one embodiment of the present application, the soft monomer may include a monomer having a glass transition temperature of less than 20°C, and the hard monomer may include a monomer having a glass transition temperature of 20°C or higher.

In one embodiment of the present application, the soft monomer may include at least one monomer selected from the group consisting of a conjugated diene-based monomer and an acrylic acid ester-based monomer, and the hard monomer may include at least one monomer selected from the group consisting of a styrene-based monomer, a methacrylic acid ester-based monomer, an acrylonitrile-based monomer, and a (meth)acrylamide-based monomer.

The conjugated diene-based monomer may include at least one monomer selected from the group consisting of 1,3-butadiene, isoprene, 2,3-dimethyl-1,3-butadiene, and 1,3-pentadiene, but is not limited thereto.

The acrylic acid ester-based monomer may include at least one monomer selected from the group consisting of methyl acrylate, ethyl acrylate, propyl acrylate, isopropyl acrylate, n-butyl acrylate, isobutyl acrylate, t-butyl acrylate, n-hexyl acrylate, 2-hexyl methacrylate, n-amyl acrylate, isoamyl acrylate, 2-ethylhexyl acrylate, 2-hydroxyethyl acrylate, and lauryl methacrylate, but is not limited thereto.

The styrene-based monomer may include at least one monomer selected from the group consisting of $\alpha$-methylstyrene, $\beta$-methylstyrene, p-t-butylstyrene, and divinylbenzene, but is not limited thereto.

The methacrylic acid ester-based monomer may include at least one monomer selected from the group consisting of methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, 2-ethylhexyl methacrylate, hydroxyethyl methacrylate, hydroxypropyl methacrylate, isobornyl acrylate, isovinyl acrylate, and isovinyl methacrylate, but is not limited thereto.

The acrylonitrile-based monomer may include acrylonitrile or methacrylonitrile, but is not limited thereto.

The (meth)acrylamide-based monomer may include at least one monomer selected from acrylamide, methacrylamide, n-methylolacrylamide, and n-butoxymethylacrylamide, but is not limited thereto.

In one embodiment of the present application, the copolymer particles may have a glass transition temperature (Tg) in the range of -40°C to -15°C.

For example, the glass transition temperature (Tg) of the copolymer particles may be in the range of -40°C to -15°C, -38°C to -15°C, -36°C to -15°C, -36°C to -16°C, -34°C to -16°C, -32°C to -16°C, or -32°C to -17°C.

The copolymer particles have a low glass transition temperature (Tg) in the range of -40°C to -15°C, and thus are more hydrophobic than copolymers used as binders in conventional batteries. For this reason, migration is suppressed, and the film formation rate is increased, leading to high adhesion.

In addition, the copolymer particles are highly crosslinked and, therefore, exhibit not only excellent adhesion due to having high elasticity but also excellent flexibility due to having a low glass transition temperature (Tg). Accordingly, the copolymer particles can be used for the production of thick electrodes.

When the glass transition temperature (Tg) of the copolymer particles exceeds the above range, the adhesion between an active material and a metal substrate and/or between such active materials may decrease. In contrast, when the glass transition temperature (Tg) of the copolymer particles falls below the above range, electrode coating stability may be reduced.

In one embodiment of the present application, the copolymer particles may have an average particle diameter in the range of 20 to 500 nm.

For example, the average particle diameter of the copolymer particles may be in the range of 20 to 500 nm, 25 to 400 nm, 30 to 300 nm, 35 to 250 nm, 40 to 200 nm, 20 to 100 nm, 100 to 150 nm, 150 to 200 nm, 200 to 250 nm, 250 to 300 nm, 300 to 350 nm, 350 to 400 nm, 400 to 450 nm, or 450 to 500 nm.

When the average particle diameter of the copolymer particles exceeds the above range, electrode processability may deteriorate. In contrast, when the average particle diameter of the copolymer particles falls below the above range, the adhesion between an active material and a metal substrate and/or between such active materials may decrease.

In one embodiment of the present application, the mixture may include an emulsifier, and the emulsifier may be present in an amount in the range of 1 to 10 parts by weight with respect to 100 parts by weight of a first monomer mixture. Additionally, a surfactant may be used as the emulsifier, and examples thereof used may include anionic surfactants, cationic surfactants, zwitterionic surfactants, and nonionic surfactants. Preferably, an anionic surfactant is used.

Specific examples of the anionic surfactants may include alkali salts of higher fatty acids, N-acrylamino acid salts, alkyl ether carboxylates, acylated peptides, alkyl sulfonates, alkylbenzenes, alkyl amino acid salts, alkyl naphthalene sulfonates, sulfosuccinates, sulfated oils, alkyl sulfates, alkyl ether sulfates, alkyl aryl ether sulfates, alkyl amide sulfates, alkyl phosphates, alkyl ether phosphates, and alkyl aryl ether phosphates, but are not limited thereto. Preferably, sodium dodecylbenzenesulfonate is used.

In one embodiment of the present application, the mixture may include an initiator, and the initiator may be present in an amount in the range of 0.1 to 10 parts by weight and preferably in the range of 0.2 to 5 parts by weight, with respect to 100 parts by weight of the first monomer mixture. However, to the extent that the initiator can function to initiate polymerization, the amount thereof is not limited thereto.

According to one aspect of the present application, a binder composition may include any one of the copolymer particles.

According to one aspect of the present application, a slurry may include any one of the copolymer particles and an electrode active material.

In one embodiment of the present application, the slurry may include a solvent, and examples of the solvent may include water or an organic solvent such as carboxymethyl cellulose (CMC), N-methyl pyrrolidone (NMP), dimethylformamide (DMF), acetone, and dimethylacetamide. Preferably, CMC is used. Additionally, the slurry may include at least one solvent.

This CMC may have a degree of substitution of hydroxy groups (-OH) with carboxymethyl groups ($-CH_2CO_2H$) in the range of 0.7 to 1.2, a molecular weight (Mn) in the range of 500,000 to 900,000, and a pH in the range of 6.5 to 8.0.

In one embodiment of the present application, the slurry, per 100 wt% thereof, may include 0.1 to 10 wt% of the copolymer particles. For example, the slurry, per 100 wt% thereof, may include 0.1 to 8 wt%, 0.1 to 6 wt%, 0.1 to 4 wt%, or 0.1 to 3 wt% of the copolymer particles. Additionally, the slurry may include CMC and an electrode active material capable of lithium-ion intercalation and deintercalation.

According to one aspect of the present application, an electrode may include a current collector and an electrode active material layer formed on the current collector, the electrode active material layer including the copolymer particles. The electrode may be either a positive electrode or a negative electrode.

In one embodiment of the present application, a negative electrode using a negative electrode slurry including 1.8 parts by weight of the copolymer particles based on 100 parts by weight of the total weight of the negative electrode slurry may exhibit an adhesion of 20 gf/cm or more. For example, the adhesion may be 20 gf/cm or more and 26 gf/cm or less, 21 gf/cm or more and 25 gf/cm or less, or 22 gf/cm or more and 24 gf/cm or less. Additionally, a negative electrode using a negative electrode slurry including 1.3 parts by weight of the copolymer particles based on 100 parts by weight of the total weight of the negative electrode slurry may exhibit an adhesion of 15 gf/cm or more. For example, the adhesion may be 15 gf/cm or more and 20 gf/cm or less, 15 gf/cm or more and 19 gf/cm or less, or 15.5 gf/cm or more and 18 gf/cm or less.

In one embodiment of the present application, the current collector is a portion where electron movement occurs during an electrochemical reaction of the active material. Depending on the electrode type, a negative electrode current collector and a positive electrode current collector may be provided. The current collector may enhance the bonding strength of an electrode active material by forming fine protrusions and depressions on the surface thereof, and may be used in various forms, including films, sheets, foils, nets, porous materials, foams, and non-woven fabrics.

Typically, the negative electrode current collector may be formed to a thickness in the range of 5 to 30 $\mu$m. Such a negative electrode current collector is not particularly limited as long as it is conductive without causing chemical changes in batteries in the art. For example, a copper foil, a nickel foil, a stainless steel foil, a titanium foil, a nickel foam, a copper foam, a polymer substrate coated with a conductive metal, or a combination thereof may be used.

Typically, the positive electrode current collector may be formed to a thickness in the range of 3 to 500 $\mu$m. The positive electrode current collector is not particularly limited as long as it is highly conductive without causing chemical changes in batteries in the art. For example, copper, stainless steel, aluminum, nickel, titanium, calcined carbon, copper or stainless steel the surface of which is treated with carbon, nickel, titanium, silver, and the like, aluminum-cadmium alloy, and the like may be used.

In one embodiment of the present application, the electrode active material, which is capable of causing an electrochemical reaction, is used in the preparation of negative and positive electrode slurries. Depending on the electrode type, a negative electrode active material and a positive electrode active material may be provided.

The negative electrode active material may be at least one selected from the group consisting of carbon and graphite materials capable of lithium-ion intercalation and deintercalation, Si-based materials, metals and compounds capable of alloying with lithium, composites of metals and compounds thereof with carbon and graphite materials, nitrides containing lithium, and the like.

Examples of the carbon and graphite materials include natural graphite, synthetic graphite, expanded graphite, carbon fibers, non-graphitizable carbon, carbon black, carbon nanotubes, fullerene, activated carbon, hard carbon, and soft carbon. Examples of the Si-based materials include Si, $SiO_x$ (where $0 < x < 2$), Si-Y alloys (where Y is an alkali metal, alkaline earth metal, a Group 13 element, a Group 14 element, a transition metal, a rare-earth element, or a combination thereof), Si-C composites, or Si-based compounds of combinations thereof. Examples of the metals and elements capable of alloying with lithium include Al, Si, Sn, Ag, Bi, Mg, Zn, In, Ge, Pb, Pd, Pt, and Ti. The negative electrode slurry, with respect to 100 parts by weight thereof, may include 20 to 80 parts by weight of the negative electrode active material.

As the positive electrode active material, a lithium transition metal oxide represented by Chemical Formula 1 may be used alone. Alternatively, in some cases, other positive electrode active materials capable of lithium-ion intercalation and deintercalation may be mixed for use.

Examples of the positive electrode active material used may include layered compounds such as lithium cobalt oxide ($LiCoO_2$) and lithium nickel oxide ($LiNiO_2$), or compounds substituted with one or more transition metals; lithium manganese oxides such as $Li_{1+y}Mn_{2-y}O_4$ (where y is in the range of 0 to 0.33), $LiMnO_3$, $LiMn_2O_3$, and $LiMnO_2$; lithium copper oxide ($Li_2CuO_2$); vanadium oxides such as $LiV_3O_8$, $LiFe_3O_4$, $V_2O_5$, and $Cu_2V_2O_7$; Ni-site-type lithium nickel oxides represented by a chemical formula $LiNi_{1-y}MyO_2$ (where M Co, Mn, Al, Cu, Fe, Mg, B, or Ga, and y = 0.01 to 0.3); lithium manganese composite oxides represented by a chemical Formula $LiMn_{2-y}MyO_2$ (where M = Co, Ni, Fe, Cr, Zn, or Ta, and y = 0.01 to 0.1) or $Li_2Mn_3MO_8$ (where M = Fe, Co, Ni, Cu, or Zn); $LiMn_2O_4$ in which a portion of Li is substituted with an alkaline earth metal ion; disulfide compounds; and $Fe_2(MoO_4)_3$, but are not limited thereto.

Preferably, the positive electrode active material includes lithium nickel-manganese cobalt oxide represented by Chemical Formula 1 of $Li_aNi_xMn_yCo_zO_2$ (where in the above formula, $0.8 \le a < 1.2$, $0.2 \le x < 1$, $0 < y < 1$, $0 < z < 1$, and x + y + z = 1), and $LiCoO_2$. The lithium transition metal oxide represented by Chemical Formula 1 exhibits high discharge capacity and, therefore, is preferably included in an amount of at least 20 wt% with respect to the total positive electrode active material and more preferably included in an amount in the range of 20 to 90 wt%. $LiCoO_2$ may be included in an amount in the range of 20 to 80 wt% based on the total weight of the positive electrode active material.

According to one aspect of the present application, a secondary battery may include the electrode.

In one embodiment of the present application, the secondary battery including the negative electrode using the negative electrode slurry including 1.3 parts by weight of the copolymer particles based on 100 parts by weight of the total weight of the negative electrode slurry may have an internal resistance of 255 mΩ or less. For example, the internal resistance of the secondary battery may be 253 mΩ or less and 235 mΩ or more, 251 mΩ or less and 238 mΩ or more, or 249 mΩ or less and 240 mΩ or more. In other words, in the case of a secondary battery manufactured using the copolymer particles, the glass transition temperature (Tg) of which falls within the above range, excellent adhesion between the active material and the metal substrate and/or between such active materials can be achieved even with a smaller amount of the copolymer particles. Additionally, the internal resistance value of the battery, as measured based on direct current internal resistance (DC-IR), can be reduced.

In one embodiment of the present application, the secondary battery including the negative electrode using the negative electrode slurry including 1.8 parts by weight of the copolymer particles based on 100 parts by weight of the total weight of the negative electrode slurry may have a capacity retention rate of 95% or more. For example, the capacity retention rate of the secondary battery may be 95% or more and 99% or less, or 96% or more and 98% or less.

In one embodiment of the present application, the secondary battery may include a separator. The separator is interposed between positive and negative electrodes, and a thin insulating film having high ion permeability and mechanical strength can be used. The separator typically has a pore diameter in the range of 0.01 to 10 μm and a thickness in the range of 5 to 300 μm. Examples of such a separator used may include olefin-based polymers, such as chemical-resistant and hydrophobic polypropylene, as well as sheets or non-woven fabrics made of glass fibers or polyethylene. A solid electrolyte such as a polymer, used as an electrolyte, may also function as the separator.

The lithium salt-containing non-aqueous electrolyte solution is made of an electrolyte solution and a lithium salt, and examples thereof used may include non-aqueous organic solvents, organic solid electrolytes, and inorganic solid electrolytes.

Examples of the non-aqueous organic solvents used may include aprotic organic solvents, such as N-methyl-2-pyrrolidinone, propylene carbonate, ethylene carbonate (EC), butylene carbonate, dimethyl carbonate, diethyl carbonate (DEC), gamma-butyrolactone, 1,2-dimethoxyethane, tetrahydroxy franc, 2-methyltetrahydrofuran, dimethyl sulfoxide, 1,3-dioxolane, formamide, DMF, dioxolane, acetonitrile, nitromethane, methyl formate, methyl acetate, phosphate triester, trimethoxymethane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

Examples of the organic solid electrolytes used may include polyethylene derivatives, polyethylene oxide derivatives, polypropylene oxide derivatives, phosphoric acid ester polymers, poly agitation lysine, polyester sulfide, polyvinyl alcohol, polyvinylidene fluoride (PVDF), and polymers containing an ionic dissociation group.

Examples of the inorganic solid electrolytes used may include nitrides, halides, and sulfates of Li, such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, and $Li_3PO_4$-$Li_2S$-$SiS_2$.

The lithium salt is a substance that is easily dissolved in the non-aqueous electrolyte, and examples thereof used may include LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, $(CF_3SO_2)_2NLi$, lithium chloroborate, lithium salts of lower aliphatic carboxylic acids, lithium tetraphenylborate, and imide.

Additionally, for the purpose of improving charge/discharge characteristics, flame retardancy, and the like, pyridine, triethyl phosphite, triethanolamine, cyclic ether, ethylenediamine, n-glyme, hexaphosphoric acid triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, aluminum trichloride, and the like may, for example, be added as the electrolyte solution. In some cases, halogen-containing solvents such as carbon tetrachloride and trifluoroethylene may be further included to provide non-flammability, and carbon dioxide gas may be further included to improve high-temperature preservation characteristics. Furthermore, fluoro-ethylene carbonate (FEC), propene sultone (PRS), fluoro-propylene carbonate (FPC), EC, ethyl methyl carbonate (EMC), DEC, and the like may be further included.

In one embodiment of the present application, the secondary battery can be used not only as a battery cell serving as a power source for a small device, but also is preferably used as a unit battery in a medium- to large-sized battery module including a plurality of battery cells serving as a power source for a medium- to large-sized device.

Preferred examples of the medium- to large-sized device may include: power tools driven by electric motors; electric vehicles, including electric vehicles (EVs), hybrid electric vehicles (HEVs), and plug-in hybrid electric vehicles (PHEVs); electric two-wheeled vehicles, including electric bicycles (e-bikes) and electric scooters (e-scooters); and electric golf carts, but are not limited thereto.

**Mode for Invention**

Hereinafter, the present disclosure will be described in more detail through examples. However, the following examples are intended to describe the present disclosure in more detail, and the scope of the present disclosure is not limited by the following examples.

**Examples and Comparative Examples: Preparation of Copolymer Particles**

**[Example 1]**

To 200 g of distilled water, 60 g of 1,3-butadiene and 10 g of 2-hydroxyethyl acrylate, serving as soft monomers, and 30 g of a styrene mixture, serving as a hard monomer, were added.

Subsequently, 0.5 g of sodium dodecylbenzenesulfonate serving as a surfactant was added for emulsification and then stirred. To the resulting product, 1 g of potassium sulfite serving as a degradable initiator was added to carry out a polymerization reaction, thereby preparing copolymer particles.

**[Example 2]**

Copolymer particles were prepared in the same manner as in Example 1, except that the amount of the hard monomer added was increased by 5 g.

**[Example 3]**

Copolymer particles were prepared in the same manner as in Example 1, except that the amount of the hard monomer added was increased by 10 g.

**[Comparative Example 1]**

Copolymer particles were prepared in the same manner as in Example 1, except that the monomer composition was changed and the weight ratio of the soft monomer to the hard monomer (soft:hard) was adjusted to 1:2.

**[Comparative Example 2]**

Copolymer particles were prepared in the same manner as in Example 1, except that the monomer composition was changed and the weight ratio of the soft monomer to the hard monomer (soft:hard) was adjusted to 1:1.

**[Comparative Example 3]**

Copolymer particles were prepared in the same manner as in Example 1, except that the monomer composition was changed and the weight ratio of the soft monomer to the hard monomer (soft:hard) was adjusted to 2:3.

**[Comparative Example 4]**

Copolymer particles were prepared in the same manner as in Example 1, except that the amount of the soft monomer added was increased by 20 g.

**Preparation Examples: Preparation of Negative Electrode Slurry, Negative Electrode, and Battery**

**[Preparation Example 1]**

A negative electrode slurry was prepared by mixing 97 parts by weight of graphite serving as a negative electrode active material, 1.8 parts by weight of the copolymer particles prepared in Examples 1 to 3 and Comparative Examples 1 to 4, and 1.2 parts by weight of CMC with distilled water.

The negative electrode slurry was uniformly applied on a 10-μm-thick Cu thin film using an applicator for coating, followed by drying at a temperature of 100°C for 30 minutes to manufacture a negative electrode.

A positive electrode was manufactured by mixing lithium nickel-manganese-cobalt oxide serving as a positive electrode active material, acetylene black serving as a conductive additive, and PVDF serving as a positive electrode binder at a weight ratio of 92:4:4, and applying the resulting mixture on an aluminum current collector. An electrolyte solution was prepared by dissolving $LiPF_6$ at a concentration of 1 M in a non-aqueous solvent having a composition ratio of EC:EMC:DEC = 1:2:1. A battery (full cell) was manufactured using a porous polyethylene film as a separator.

The copolymer particle types used are shown in Table 1 below.

[Table 1]

|  | Copolymer particle types |
|---|---|
| Preparation Example 1-1 | Example 1 |
| Preparation Example 1-2 | Example 2 |
| Preparation Example 1-3 | Example 3 |
| Comparative Preparation Example 1-1 | Comparative Example 1 |
| Comparative Preparation Example 1-2 | Comparative Example 2 |
| Comparative Preparation Example 1-3 | Comparative Example 3 |
| Comparative Preparation Example 1-4 | Comparative Example 4 |

**[Preparation Example 2]**

A negative electrode slurry was prepared by mixing 97 parts by weight of graphite serving as a negative electrode active material, 1.3 parts by weight of the copolymer particles prepared in Examples 1 to 3 and Comparative Examples 1 to 4, and 1.7 parts by weight of CMC with distilled water.

Other than the above, a negative electrode and a battery were manufactured in the same manner under the same conditions as those described in Preparation Example 1.

The copolymer particle types used are shown in Table 2 below.

[Table 2]

|  | Copolymer particle types |
|---|---|
| Preparation Example 2-1 | Example 1 |
| Preparation Example 2-2 | Example 2 |
| Preparation Example 2-3 | Example 3 |
| Comparative Preparation Example 2-1 | Comparative Example 1 |
| Comparative Preparation Example 2-2 | Comparative Example 2 |

**[Evaluation Examples]**

**Evaluation Example 1: Measurement of Glass Transition Temperature (Tg) of Copolymer Particles**

A small amount of each binder composition including the copolymer particles prepared in Examples 1 to 3 and Comparative Examples 1 to 4 was dried in an oven at a temperature of 120°C to form a film, followed by measuring the glass transition temperature (Tg) using a differential scanning calorimetry (DSC) thermal analysis apparatus.

The measured glass transition temperatures (Tg) are shown in Table 3 below.

[Table 3]

|  | Glass Transition temperature (Tg, °C) |
| --- | --- |
| Example 1 | -32 |
| Example 2 | -24 |
| Example 3 | -17 |
| Comparative Example 1 | 4 |
| Comparative Example 2 | -3 |
| Comparative Example 3 | -8 |
| Comparative Example 4 | -49 |

The measurement results confirmed that the binder compositions corresponding to Examples 1 to 3 had glass transition temperatures of -32°C, -24°C, and -17°C, respectively, which fell within the above glass transition temperature range of -40°C to -15°C. When the glass transition temperature fell within the above range, it was also confirmed that an electrode with improved flexibility could be manufactured even at a large thickness, as described below.

On the other hand, the binder compositions corresponding to Comparative Examples 1 to 3, which differed from the present application in terms of monomer composition, were confirmed to have glass transition temperatures of 4°C, -3°C, and -8°C, respectively, which exceeded the above glass transition temperature range. In the case where the glass transition temperature exceeded the above range, cracks occurred when thick electrodes were manufactured, as described below. As a result, the electrodes were confirmed to exhibit lower flexibility than those using the binder compositions corresponding to Examples 1 to 3 of the present application.

In addition, the binder composition corresponding to Comparative Example 4, in which the content of the soft monomers exceeded the above range, was confirmed to have a glass transition temperature of -49°C, which fell below the above glass transition temperature range. In the case where the glass transition temperature fell below the above range, the coated electrode surface was uneven, as described below. As a result, it was confirmed that the electrode exhibited lower coating stability than those using the binder compositions corresponding to Examples 1 to 3 of the present application. Additionally, the electrode manufactured using the binder composition corresponding to Comparative Example 4, having an excessively low glass transition temperature, was confirmed to exhibit reduced adhesion, as described below.

**Evaluation Example 2: Measurement of Electrode Flexibility**

Electrodes were manufactured by adjusting the height of a coating bar to set a loading level so that a thick coating could be achieved. In other words, electrodes coated at a loading level of 45.8 mg/cm$^2$, which is higher than that of conventional electrodes, were constructed, and whether cracking occurred when both ends of each electrode were bent to form a difference in angle of about 15° was observed. The measurement results thereof are shown in Table 4 below. The coating stability was indicated as O when the electrode surface coated with the binder composition was even, whereas the coating stability was indicated as X when the surface was uneven. In addition, the occurrence of cracking was indicated as O when the electrode was visually confirmed to crack in half, whereas the occurrence of cracking was indicated as X when the electrode bent flexibly without cracking.

[Table 4]

|  | Coating stability | Occurrence of cracking |
| --- | --- | --- |
| Example 1 | O | X |
| Example 2 | O | X |
| Example 3 | O | X |
| Comparative Example 1 | O | O |
| Comparative Example 2 | O | O |
| Comparative Example 3 | O | O |
| Comparative Example 4 | X | - |

When the electrode was manufactured using the binder composition including the copolymer particles prepared in Comparative Example 4, the electrode surface coated with the binder composition was uneven, showing irregularities such as streaks. As a result, poor coating stability was observed. Accordingly, the electrode manufactured using the binder composition including the copolymer particles prepared in Comparative Example 4, which was not properly formed, was not evaluated in terms of flexibility.

FIG. 1(a) shows a photograph of a thick electrode manufactured using the binder composition including the copolymer particles prepared in Example 1, and FIG. 1(b) shows a photograph of a thick electrode manufactured using the binder composition including the copolymer particles prepared in Comparative Example 1. As shown in FIG. 1(a), the thick electrode manufactured using the binder composition including the copolymer particles prepared in Example 1 did not crack, but the thick electrode manufactured using the binder composition including the copolymer particles prepared in Comparative Example 1 cracked as shown in FIG. 1(b).

In other words, when manufacturing a thick electrode using each binder composition including the copolymer particles prepared in Examples 1 to 3, a flexible electrode was confirmed to be manufactured because the electrode did not crack.

On the other hand, when manufacturing a thick electrode using each binder composition including the copolymer particles prepared in Comparative Examples 1 to 3, the electrode cracked. As a result, compared with the electrodes manufactured using each copolymer prepared in Examples 1 to 3, the glass transition temperature of which fell within the above range, poor flexibility was observed.

## Evaluation Example 3: Measurement of Electrode Adhesion

The negative electrodes of Preparation Examples 1 and 2, manufactured using the copolymer particles prepared in Examples 1 to 3 and Comparative Examples 1 to 4, were cut to a width of 25 mm and a length of 100 mm. A double-sided tape having a width of 20 mm and a length of 40 mm was attached to an acrylic plate having a width of 40 mm and a length of 100 mm. Each prepared electrode was attached to the double-sided tape, lightly pressed five times using a hand roller, and then mounted on a universal testing machine (UTM, 20 kgf load cell). After peeling about 25 mm of one side portion of the negative electrode, the negative electrode was fixed to the upper clip of the tensile strength tester, and the tape attached to one surface of the negative electrode was fixed to the lower clip. Then, peeling was performed at a speed of 100 mm/min, and the force at which the electrode was separated in a 180° direction was measured. Five or more specimens per sample were constructed for measurement, and the average value was calculated. The results thereof are shown in Tables 5 and 6.

[Table 5]

|  | Adhesion (gf/cm) |
| --- | --- |
| Preparation Example 1-1 | 23.4 |
| Preparation Example 1-2 | 22.5 |
| Preparation Example 1-3 | 22.1 |
| Comparative Preparation Example 1-1 | 9.4 |
| Comparative Preparation Example 1-2 | 12.7 |
| Comparative Preparation Example 1-3 | 13.1 |
| Comparative Preparation Example 1-4 | 8.8 |

The measurement results confirmed that, as shown in Table 5, the negative electrodes of Preparation Examples 1-1 to 1-3, manufactured by including 1.8 parts by weight of the copolymer particles prepared in Examples 1 to 3, respectively, had a high adhesion of 20 gf/cm or more. In other words, the negative electrodes of Preparation Examples 1-1 to 1-3, manufactured by including 1.8 parts by weight of the copolymer particles prepared in Examples 1 to 3, respectively, were confirmed to have higher adhesion than the negative electrodes of Comparative Preparation Examples 1-1 to 1-4, manufactured by including 1.8 parts by weight of the copolymer particles prepared in Comparative Examples 1 to 4, respectively.

In particular, in the case of the negative electrodes of Comparative Preparation Examples 1-1 to 1-3, manufactured by including the copolymer particles prepared in Comparative Examples 1 to 3, respectively, the glass transition temperature of which exceeded the above range, the lower the glass transition temperature, the higher the adhesion. However, the negative electrode of Comparative Preparation Example 1-4, manufactured by including the copolymer particles prepared in Comparative Example 4, the glass transition temperature of which fell below the above range, had the lowest adhesion.

This means that when the glass transition temperature (Tg) falls within the above range of -40°C to -15°C, a negative electrode exhibiting further excellent adhesion between an active material and a metal substrate is obtainable.

[Table 6]

|  | Adhesion (gf/cm) |
|---|---|
| Preparation Example 2-1 | 18.2 |
| Preparation Example 2-2 | 16.0 |
| Preparation Example 2-3 | 15.9 |
| Comparative Preparation Example 2-1 | 6.5 |
| Comparative Preparation Example 2-2 | 8.8 |
| Comparative Preparation Example 1-3 | 13.1 |
| Comparative Preparation Example 1-4 | 8.8 |

The measurement results confirmed that, as shown in Table 6, the negative electrodes of Preparation Examples 2-1 to 2-3, manufactured by including 1.8 parts by weight of the copolymer particles prepared in Examples 1 to 3, respectively, had a high adhesion of 15 gf/cm or more. In other words, the negative electrodes of Preparation Examples 2-1 to 2-3, manufactured by including 1.3 parts by weight of the copolymer particles prepared in Examples 1 to 3, respectively, were confirmed to have higher adhesion than the negative electrodes of Comparative Preparation Examples 2-1 and 2-2, manufactured by including 1.3 parts by weight of the copolymer particles prepared in Comparative Examples 1 and 2, respectively, and the negative electrodes of Comparative Preparation Examples 1-3 and 1-4, manufactured by including 1.8 parts by weight of the copolymer particles prepared in Comparative Examples 3 and 4, respectively.

In particular, in the case of Preparation Examples 2-1 to 2-3, although the amount of the copolymer particles prepared in Examples 1 to 3 corresponded to only about 70% of the amount used in the manufacture of the negative electrodes of Preparation Example 1, it was confirmed that the adhesion was higher than that of Comparative Preparation Examples 1-1 to 1-4 in which 1.8 parts by weight of the copolymer particles prepared in Comparative Examples 1 to 4 were used.

This means that when the glass transition temperature (Tg) falls within the above range of -40°C to -15°C, a negative electrode exhibiting further excellent adhesion between an active material and a metal substrate is obtainable.

## Evaluation Example 4: Measurement of Battery Capacity Retention Rate

The batteries manufactured in Preparation Examples 1-1 to 1-3 and Comparative Preparation Examples 1-1 to 1-4 were charged and discharged twice at 25°C under the following conditions: a charge/discharge current density of 0.1 C, a charge cutoff voltage of 4.2 V, and a discharge cutoff voltage of 2.8 V.

Thereafter, the batteries were charged and discharged 100 times under the following conditions: a charge/-discharge current density of 1 C, a charge cutoff voltage of 4.2 V, and a discharge cutoff voltage of 2.8 V.

All discharging was performed under constant-current/constant-voltage conditions, and a cutoff current for the constant-voltage discharge was set to 0.005 C.

In this case, the capacity retention rate was calculated according to Equation 1 below.

<Equation 1> Capacity retention rate [%] = (discharge capacity at the 100th cycle/discharge capacity at the 1st cycle) $\times$ 100     <Equation 1>

The capacity retention rate measurement results of the batteries manufactured in Preparation Examples 1-1 to 1-3 and Comparative Preparation Examples 1-1 to 1-4 are shown in Table 7.

[Table 7]

|  | Capacity retention rate (%, at 100 cycles) |
|---|---|
| Preparation Example 1-1 | 97.0 |
| Preparation Example 1-2 | 96.7 |
| Preparation Example 1-3 | 96.1 |

(continued)

|  | Capacity retention rate (%, at 100 cycles) |
|---|---|
| Comparative Preparation Example 1-1 | 93.8 |
| Comparative Preparation Example 1-2 | 94.2 |
| Comparative Preparation Example 1-3 | 94.6 |
| Comparative Preparation Example 1-4 | 92.3 |

The measurement results confirmed that, as shown in Table 7, the batteries of Preparation Examples 1-1 to 1-3, manufactured by including 1.8 parts by weight of the copolymer particles prepared in Examples 1 to 3, respectively, had a high capacity retention rate of 95% or more. In other words, the batteries of Preparation Examples 1-1 to 1-3, manufactured by including 1.8 parts by weight of the copolymer particles prepared in Examples 1 to 3, respectively, were confirmed to have higher capacity retention rate than the batteries of Comparative Preparation Examples 1-1 to 1-4, manufactured by including 1.8 parts by weight of the copolymer particles prepared in Comparative Examples 1 to 4, respectively.

In particular, in the case of the batteries of Comparative Preparation Examples 1-1 to 1-3, manufactured by including the copolymer particles prepared in Comparative Examples 1 to 3, respectively, the glass transition temperature of which exceeded the above range, the lower the glass transition temperature, the higher the capacity retention rate. However, the battery of Comparative Preparation Example 1-4, manufactured by including the copolymer particles prepared in Comparative Example 4, the glass transition temperature of which fell below the above range, had the lowest capacity retention rate.

This means that when the glass transition temperature (Tg) falls within the above range of -40°C to -15°C, a battery exhibiting further excellent life characteristics is obtainable.

## Evaluation Example 5: Measurement of Battery Internal Resistance

After initial formation of the batteries manufactured in Preparation Examples 2-1 to 2-3 and Comparative Preparation Examples 2-1, 2-2, 1-3, and 1-4, the internal resistance of the batteries was measured by a DC-IR method under conditions in which charging was performed at a 0.3 C rate in a CC/CV mode to a voltage corresponding to 50% of SOC, followed by discharging at a 2 C rate to 2.75 V. At this time, the chamber temperature was 25°C.

The internal resistance measurement results of the batteries manufactured in Preparation Examples 2-1 to 2-3 and Comparative Preparation Examples 2-1, 2-2, 1-3, and 1-4 are shown in Table 8.

[Table 8]

|  | Internal resistance (DC-IR, m$\Omega$) |
|---|---|
| Preparation Example 2-1 | 245.3 |
| Preparation Example 2-2 | 248.1 |
| Preparation Example 2-3 | 247.2 |
| Preparation Example 2-4 | 263.7 |
| Preparation Example 2-5 | 264.4 |
| Preparation Example 1-6 | 315.6 |
| Preparation Example 1-7 | 324.1 |

The measurement results confirmed that, as shown in Table 8, the batteries of Preparation Examples 2-1 to 2-3, manufactured by including 1.3 parts by weight of the copolymer particles prepared in Examples 1 to 3, respectively, had a low internal resistance of 255 m$\Omega$ or less. In other words, the batteries of Preparation Examples 2-1 to 2-3, manufactured by including 1.3 parts by weight of the copolymer particles prepared in Examples 1 to 3, respectively, were confirmed to have a lower internal resistance value than the batteries of Comparative Preparation Examples 2-1 and 2-2, manufactured by including 1.3 parts by weight of the copolymer particles prepared in Comparative Examples 1 and 2, respectively, and the batteries of Comparative Preparation Examples 1-3 and 1-4, manufactured by including 1.8 parts by weight of the copolymer particles prepared in Comparative Examples 3 and 4, respectively.

This means that when the glass transition temperature (Tg) falls within the above range of -40°C to -15°C, a battery exhibiting excellent performance in which power loss due to internal resistance is reduced is obtainable.

The scope of the present disclosure is defined by the appended claims rather than the detailed description presented above. All changes or modifications derived from the meaning and scope of the claims and the concept of equivalents should be construed to fall within the scope of the present disclosure.

**Industrial Applicability**

According to the present disclosure, copolymer particles and a binder composition including the same improve the adhesion between an active material and a metal substrate and/or between such active materials, enable production of a flexible and unbreakable thick electrode film, and improve stability in an electrolyte solution and slurry dispersibility, thereby ensuring a secondary battery with high initial discharge capacity and excellent charge/discharge cycle characteristics.

Additionally, when using copolymer particles with excellent adhesion and a binder composition including the same, only a small amount of the binder composition can be used, thereby reducing the internal resistance of a secondary battery and increasing the active material capacity.

**Claims**

1. Copolymer particles formed by polymerizing a mixture comprising 1.5 parts by weight or more and less than 3.0 parts by weight of a soft monomer per 1.0 part by weight of a hard monomer,
   wherein the copolymer particles have a structure other than a core-shell structure.

2. The copolymer particles of claim 1, wherein the soft monomer comprises a monomer having a glass transition temperature (Tg) of less than 20°C, and
   the hard monomer comprises a monomer having a glass transition temperature (Tg) of 20°C or higher.

3. The copolymer particles of claim 1, wherein the soft monomer comprises at least one monomer selected from the group consisting of a conjugated diene-based monomer and an acrylic acid ester-based monomer, and
   the hard monomer comprises at least one monomer selected from the group consisting of a styrene-based monomer, a methacrylic acid ester-based monomer, an acrylonitrile-based monomer, and a (meth)acrylamide-based monomer.

4. The copolymer particles of claim 1, wherein the copolymer particles have a glass transition temperature in a range of -40°C to -15°C.

5. The copolymer particles of claim 1, wherein the copolymer particles have an average particle diameter in a range of 20 to 500 nm.

6. A binder composition comprising:
   the copolymer particles of any one of claims 1 to 5.

7. A slurry comprising:

   the copolymer particles of any one of claims 1 to 5; and
   an electrode active material.

8. An electrode comprising:

   a current collector; and
   an electrode active material layer formed on the current collector, the electrode active material layer comprising the copolymer particles of any one of claims 1 to 5.

9. A secondary battery comprising:
   the electrode of claim 8.

Figure 1

# EP 4 786 508 A1

## INTERNATIONAL SEARCH REPORT

| | International application No. |
|---|---|
| | **PCT/KR2024/014740** |

### A. CLASSIFICATION OF SUBJECT MATTER

**C08F 236/06**(2006.01)i; **C08F 236/10**(2006.01)i; **C08F 220/20**(2006.01)i; **H01M 4/62**(2006.01)i; **H01M 4/13**(2010.01)i; **H01M 4/139**(2010.01)i; **H01M 10/0525**(2010.01)i

According to International Patent Classification (IPC) or to both national classification and IPC

### B. FIELDS SEARCHED

Minimum documentation searched (classification system followed by classification symbols)

C08F 236/06(2006.01); C08F 220/14(2006.01); C08F 220/18(2006.01); C08F 220/44(2006.01); C09J 133/06(2006.01); C09J 133/08(2006.01); C09J 133/20(2006.01); H01M 10/0525(2010.01); H01M 2/26(2006.01); H01M 4/13(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 공중합체 입자(copolymer particle), 바인더(binder), 이차전지(secondary battery), 경질단량체(hard monomer), 연질단량체(soft monomer)

### C. DOCUMENTS CONSIDERED TO BE RELEVANT

| Category* | Citation of document, with indication, where appropriate, of the relevant passages | Relevant to claim No. |
|---|---|---|
| X | CN 116376479 A (JIANGXI XINQIANYAN TECHNOLOGY CO., LTD.) 04 July 2023 (2023-07-04) See claim 1; example 1; and paragraphs [0002] and [0048]-[0050]. | 1,6-9 |
| Y | | 2-5 |
| Y | KR 10-1698745 B1 (HANSOL CHEMICAL CO., LTD. et al.) 23 January 2017 (2017-01-23) See claims 1-4. | 2-5 |
| A | CN 115386033 A (SHENZHEN POWER SOURCE ELECTRONICS CO., LTD.) 25 November 2022 (2022-11-25) See claims 1 and 9. | 1-9 |
| A | CN 114736632 A (RUIGU XINNENG (SHANGHAI) MATERIAL TECHNOLOGY CO., LTD.) 12 July 2022 (2022-07-12) See claim 1; and example 1. | 1-9 |

☑ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 January 2025** | **09 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/014740** |

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 2018-195584 A (LINTEC CORP.) 06 December 2018 (2018-12-06)<br>See claims 1-7. | 1-9 |

Form PCT/ISA/210 (second sheet) (July 2022)

**INTERNATIONAL SEARCH REPORT**
Information on patent family members

International application No.

**PCT/KR2024/014740**

| Patent document cited in search report | | | Publication date (day/month/year) | Patent family member(s) | | | Publication date (day/month/year) |
|---|---|---|---|---|---|---|---|
| CN | 116376479 | A | 04 July 2023 | None | | | |
| KR | 10-1698745 | B1 | 23 January 2017 | None | | | |
| CN | 115386033 | A | 25 November 2022 | None | | | |
| CN | 114736632 | A | 12 July 2022 | None | | | |
| JP | 2018-195584 | A | 06 December 2018 | JP | 6660978 | B2 | 11 March 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 101698745